# EUROPEAN PATENT APPLICATION

(11) **EP 3 075 650 A1**
(43) Date of publication of application: **05.10.2016**
(21) Application number: 15161712.3
(22) Date of filing: 30.03.2015
(51) Int. Cl.: B64C 1/06, B64D 11/00, B64D 11/04

(54) **Large self-carrying monument assembly for an aircraft and an aircraft having such a monument assembly**

(71) Applicant: Airbus Operations GmbH, 21129 Hamburg (DE)
(72) Inventor: Schliwa, Ralf, 21129 Hamburg (DE); Lerche, Thomas, 21129 Hamburg (DE); Haack, Cord, 21643 Beckdorf (DE); Hegenbart, Matthias, 21129 Hamburg (DE); Radny, Matthias, 21129 Hamburg (DE); Schopenhauer, Wolfram, 21129 Hamburg (DE); Sturm, Ralph, 21129 Hamburg (DE); Rueter, Jon, 21129 Hamburg (DE)
(74) Representative: Kopf Westenberger Wachenhausen Patentanwälte PartG mbB

(57) **Abstract**

A monument assembly (46) for an aircraft comprises at least one component of a primary structure of the aircraft, in particular a fuselage stiffening element (6, 84), a plurality of interconnected framework elements (12) for creating a self-carrying three-dimensional framework (13), wherein the at least one fuselage stiffening element (6, 84) is attacheable to a skin (4) of the aircraft and comprises at least one bracket, wherein the framework (13) is mechanically supported on the at least one bracket of the at least one component of the primary structure of the aircraft and wherein the framework (13) comprises a plurality of compartments (10, 15) accessible from an interior region of the aircraft, which compartments (10, 15) are adapted for receiving and holding cabin equipment modules.

## Description

### TECHNICAL FIELD

The invention relates to a monument assembly for an aircraft and an aircraft having such a monument assembly.

### BACKGROUND OF THE INVENTION

Aircraft usually comprise a fuselage, to which wings are attached and in which a cabin is created. The layout of the cabin highly depends on individual requirements of the respective aircraft operator, including the division into several classes, the position, design and number of galleys, lavatories and additional stowage compartments. For increasing the economical efficiency of an aircraft, one of the above mentioned requirements may particularly be directed to a maximization of the number of passenger seats. This often leads to the demand for a more efficient galley setup, i.e. the required functions packed into a minimized installation space and at the same time maintaining the ergonomy for cabin personnel, such that more installation space inside the cabin remains available for the integration of additional passenger seats.

Given that often aircraft operators have a demand for individually designed galleys or other cabin monuments, seat arrangements and number of available seats, modular designs exist, which depend on available installation positions and attachment means inside the cabine.

WO 2012110643 A1 shows a modular cabin segment and a vehicle having such a cabin segment, which comprises a first lateral segment module that accommodates a first toilet arrangement with a toilet compartment, and a second lateral segment module, wherein in each case an outer lateral face of the first segment module and of the second lateral segment module is designed to adapt in each case to an inner wall of a cabin of the vehicle so as to correspond to the aforesaid.

### SUMMARY OF THE INVENTION

However, the limitations to available installation positions of certain monuments inside the cabin are relatively strict. It may therefore be an object to propose an aircraft that allows a space efficient, yet flexible and individual integration of cabin monuments, which are able to still further increase the number of available seats in the cabin while maintaining the comfort and ergonomic characteristics for passengers and cabin personnel.

The object is met by a monument assembly having the features of independent claim 1. Advantageous embodiments and further improvements may be derived from the subclaims and the following description.

It is proposed a monument assembly for an aircraft, the assembly comprising at least one component of a primary structure of the aircraft, in particular a fuselage stiffening element, and a plurality of interconnected framework elements for creating a self-carrying three-dimensional framework, wherein the at least one component of the primary structure of the aircraft is attachable to a skin of the aircraft and comprises at least one holding means. The framework is mechanically supported on the at least one holding means and comprises a plurality of compartments accessible from an interior region of the aircraft, which compartments are adapted for receiving and holding cabin equipment modules.

A fuselage of an aircraft usually consists of a structure having a particularly low weight, including a skin made from a sheet-like material attached to a plurality of stiffening elements, which define the overall shape of the aircraft fuselage. The stiffening elements often include parallel frame members arranged at a distance to each other, each having a profile cross-section that extends along a substantially closed contour in a circumferential direction, and longitudinal stiffening elements. The latter are often referred to as stringers and extend substantially parallel to a longitudinal axis of the aircraft for providing torsional stiffness around axes perpendicular to the longitudinal axis. The skin extends over all frame elements and the stringers are attached to an inner side of the skin. The frame elements and the stringers constitute the primary structure of the aircraft. Commercial aircraft often comprise a pressurized cabin, which is delimited on a rear side by a pressure bulkhead, which may also be a part of or integrated into the primary structure.

The mechanical stability of some elements of the primary structure may exceed a stability needed for the nomal operation of the aircraft. This may especially be the case when standardized and common profiles are used throughout the aircraft or over large sections for creating stiffening elements of the primary structure. However, as the expectable mechanical loads vary along the longitudinal axis of the aircraft it is possible that e.g. some frame elements may be capable of carrying much higher loads than they will ever experience. These clearly allow to provide further mechanical functions, which go beyond the function of providing a sufficiently stable fuselage.

The set of framework elements that constitute a spatial framework, i.e. a space frame, may be realized of any suitable type, which allow to carry a sufficient portion of the load occuring in the framework. These may include longitudinal rod-like elements, beams, tubes, planar elements or a combination thereof. The size of the framework, i.e. the extension in all three dimensions, the position and structural characteristics may be chosen according to desired individual functions of the eqipment modules to be integrated or according to a more general, modular approach, leading to the capability of an integration of any possible module.

A holding means may be any fastening element, which is capable of connecting a framework element and the at least one stiffening element. The holding means may be attached to, integrated into or coupled with the at least one component of the primary structure.

Preferably, each of the framework elements is supported on at least one holding means, such that the load transfer between the framework elements and the at least one component of the primary structure is harmonic over the complete dimensional extensions of the framework. Further, individual loads that act on the individual framework elements, especially on interfaces with other framework elements, are reduced. Still further, the mechanical redundancy is increased, such that a single failure of a connection between the at least one component of the primary structure and the respective framework element only has a neglectible effect on the framework.

A core aspect of the assembly according to the invention lies in providing an excellent ability to customize a large and completely modular equipable monument due do its integration into a primary structure of a fuselage instead of the integration of a plurality of much smaller monuments into a cabin structure, which itself is supported in the primary structure. Hence, besides the elimination of load transfers between such a large monument assembly and the cabin strucure the self-supporting assembly is completely independent from any cabin layout and may extend into a space of the aircraft, which does not necessarily comprise passenger seats, such as a tail region in front of a pressure bulkhead. The cabin and particularly the cabin floor do not have to extend into the framework.

In an advantageous embodiment, the holding means is a bracket attacheable to the at least one component of the primary structure of the aircraft. The integration of simple brackets may easily be possible as a retrofit solution. For example, brackets may be bolted to the component of the primary structure depending on the desired extension and position of the framework.

Still further, the bracket may protrude from the at least one component of the primary structure of the aircraft. A bracket may comprise a combination of a web and an attachment surface, which are arranged perpendicularly to each other. The web may extend over the at least one component and allows to carry or hold a respective framework element.

In an advantageous embodiment, the at least one component of the primary structure is a frame element extending around a longitudinal axis of the aircraft. As explained above, a frame element of an aircraft fuselage comprises a substantially closed and preferably rounded contour, along which a certain stability providing profile cross-section extends. Such a profile cross-section preferably comprises a web and one or several legs attached thereto and extending at an angle relative to the web, which leads to an exceptional stability of a resulting frame element. The at least one holding means may be attached to, coupled with or integrated into such a leg or web and may include an opening, a cut-out, a recess, a threaded hole, a swivable fork or any other element that allows to attach a framework element to the respective frame element.

Preferably, the holding means is adapted for providing a variable fastening angle and, consequently, may act as an angular joint, which eliminates structural stresses that arise due to constraint forces in the framework. It is clear that the framework should at the same time be adapted for a connection with the at least one holding means, which may be conducted through the integration of a corresponding element, such as another bracket, a bolt, a web, etc.

In order to minimize the effort of introducing a framework into an already existing fuselage, the at least one holding means may also be easily attachable to the frame element without altering the mechanical stability of the frame element. The holding means may be bolted or screwed to the respective frame element or any other component of the primary structure.

For clarification, the longitudinal axis of the aircraft is defined by the main extension direction of the fuselage, which is often referred to as x-axis in an aircraft-fixed coordinate system. Hence, the respective frame element lies in a y-z-plane.

In another advantageous embodiment, the at least one component of the primary structure is a frame element arranged in a tail region of the aircraft, in front of or coinciding with a pressure bulkhead. Commonly, aircraft fuselages comprise a relatively large section having a substantially constant cross-sectional surface, completed by a nose section and a tail section, which comprises a tapered shape having a constantly decreasing width, height and/or mean diameter. Accordingly, the frame elements arranged in the tail region may be relatively small. Further, the pressurized cabin of an aircraft is usually delimited by a pressure bulkhead in a rearward direction, which pressure bulkhead comprises a curved, bulgy shape for stability reasons. The section directly in front of the pressure bulkhead often remains hardly used for cabin equipment, especially in double-deck aircraft. It suggests itself for integration of the above-mentioned framework. As often all frame elements in an aircraft are based on a common design, which not only depends on the mechanical rigidity, but also on a required surface size for a contact to the fuselage skin etc, the rearward frame elements often provide an excessive mechanical stability. This in turn provides an excellent ability to carry the above-mentioned framework.

The pressure bulkhead usually follows the shape of a rearward frame element, behind which it is installed. For a particular efficiency, the pressure bulkhead and the rearmost frame element may be an integral part. Hence, the at least one component of the primary structure mentioned regarding the core features of the monument assembly, may also be the pressure bulkhead in this case and more particularly, an outer ring or edge of the pressure bulkhead.

Still further, the framework may substantially extend over the complete interior space of an associated length-wise section in the fuselage. Hence, the framework substantially extends over the complete available space in z-direction inside the fuselage. Depending on the position of the framework inside the fuselage and its extension in x-direction, the "associated length-wise section" is constituted, i.e. a slice of the fuselage, in which the framework is situated. Particularly, in the tail region of the aircraft as mentioned above, the framework constitutes a system, which is completely independent from the cabin, as the cabin and particularly the cabin floor(s) only extend to a forwardmost delimitation of the framework.

The compartments in the framework may be arranged in a grid having at least two rows of compartments, which rows follow on after another in a vertical direction. Resultantly, the framework may be considered a shelf-like system allowing to receive equipment modules in a sorted, but also in a flexible manner. The rows do not have to extend along the complete available width, it may also extend along only a part of the available width.

At least one row or at least one group of rows may be associated with a cabin deck of the aircraft. The cabin, which comprises a cabin floor, may extend up to a forward end of the framework. The cabin floor does not have to extend into the framework, instead, the framework may provide its own floor. Depending on the height of the cabin or cargo deck, a plurality of rows of compartments may be present for housing cabin-related equipment, such as galley equipment.

The same applies to at least one row or one group of rows, which is associated with a cargo deck of the aircraft.

It is particularly advantageous if a top region of a row or an upper row of a group of rows associated with the cabin deck or a cargo deck or simply a remaining upper space above an upper row outside a reachable height relative to the floor of the respective deck, comprises a rack for at least one auxiliary system. Such an auxiliary system is to be understood as a system that does not have to be accessed during the flight by personnel from inside the cabin. However, as the height of the respective top region or upper row may be excessive for cabin personnel, cooling systems, in flight entertainment systems, underfloor storage or any other systems may easily be arranged therein.

The monument assembly may further comprise a plurality of cabin equipment modules, chosen from a group of cabin equipment modules, the group consisting of storage compartments, cabin trolley parking spaces, compartments for holding galley appliances, stairs, lifts and restrooms. The lifts may be useable by passengers and&or for cabin trolleys. The design of the equipment modules is very flexible.

However, particularly regarding retrofit or maintenance considerations, it is preferred that the equipment modules are dimensioned so as to fit through a door of the aircraft. Exemplarily, an equipment module should not exceed a width of approximately 1000 mm and a depth of approximately 1500 mm or vice versa. More particularly, the cabin doors of an AIRBUS A380 would allow equipment modules with a width of 1042 mm and a depth of 1550 mm or vice versa to be inserted into the cabin. The height of the equipment modules insertable into the cabin depends on the available width in the cabin. However, the height of an equipment module to be inserted into the cabin and the framework, respectively, may also depend on the height of the cabin deck, to which the equipment module is associated.

The compartments and various equipment modules may vary in size and purposes. For example, lower rows of compartments may be used for housing larger equipment modules, such as trolley receiving compartments, i.e. parking spaces, storage compartments, waste bin compartments, waste compactors and so on. The respective equipment modules may in this case be limited to wall elements and auxiliary systems, such as a waste compacting mechanism and cooling devices.

Exemplarily, the height of equipment modules, which constitute trolley receiving compartments, may be dimensioned to provide sufficient space for housing a standard full-size or half-size trolley, which commonly has a height of 1030 mm. Hence, the available height of the receiving space may measure 1050 mm, leading to a height of the respective equipment module depending on the thickness of the side walls of the equipment module, which may be in the range of 5 to 25 mm or slightly more or less. In the same manner, equipment modules for housing galley appliances or storage compartments directly above trolley receiving compartments may comprise a common available inner height, which is slightly more than 600 mm, e.g. 674 mm. Above these, additional compartments may be installed with an even smaller available inner height, such as 300 mm, for receiving storage standard boxes. The grid pattern of an arrangement of galley-related compartments may be driven by the width of cabin trolleys.

Equipment modules arranged in compartments above trolley receiving compartments may have a smaller depth than the trolley receiving compartments and/or are placed further to a rear side of the framework, such that a step in x-wise direction in the front of the fully equipped framework is created, which allows the integration of a workdeck above the trolley receiving compartment above the compartment placed on top of the trolley receiving compartment.

For the purpose of a normal operation, galley related equipment modules should be able to connect to an electrical network, an air extraction system, a cooling system and/or other potentially required systems.

The compartments may further comprise arresting means, such as holes, threaded holes for receiving locking screws, brackets for receiving a frame of an equipment module or a holding frame that clamps the equipment module to the bracket. Of course, other known attachment means suitable for holding the equipment modules may be used.

As the cabin equipment modules should be installed in the aircraft for more than just a temporary use, they should be installed in a firm and fixed manner. However, the use of the framework allows to more often change the layout of the monument assembly with little effort. For improving the ease of installation, the compartments may comprise receiving and/or guiding elements that allow to guide equipment modules into an opening of the respective compartments from an insertion position into a use position, where the equipment modules are arrested.

The monument assembly according to the invention particularly allows to replace the stairs in a rear section of a double-deck aircraft, such as the AIRBUS A380, with a more modular assembly. However, due to the modular approach, several compartments may be equipped with stairs modules that allow to change the cabin deck. Especially in the configuration of a two-deck aircraft, the optimization of a rear end of the cabin allows to replace the current stairs by a smaller staircase, resulting in sufficient space for adding more passenger seats into the cabin. Particularly, in the A380 setup, this may lead to additional seats of up to 16.

Instead of separate installations and attachments of rear modules, the framework of the monument assembly leads to a "supermodule", which is load path optimized and acts as a platform for numerous sub-modules. Besides the increase in passenger seats, the weight of the aircraft can significantly be reduced, as the framework is directly attached to the primary structure of the aircraft.

Again, particularly for a two-deck aircraft, the framework extending over the whole available height in the fuselage leads to the perfect ability to include a trolley lift and, optionally, a storage space for trolleys below a lower deck. As the framework is modular in nature, no further modifications need to be conducted in the cabin, such as providing a cut-out, the integration of structural support or the such. In turn, the required depth of such a framework can be reduced as much as possible if a complete "slice" of the aircraft fuselage can be used. Hence, through an efficient use of space extending in the y-z-plane, the available space in x-direction can be reduced. This in turn leads to the capability of including more passenger seats into the cabin.

A floor structure in an aircraft, which carries a large number of passenger seats, usually comprises an extraordinary stiffness and rigidity, which allows to withstand a 16g dynamic force in x-direction. Hence, it may be worthwhile to couple the framework at least in some sections with the floor structure of the aircraft in order to introduce longitudinal forces into the floor structure. Commonly, the floor structure is dimensioned such that it withstands 9g dynamic forces of galleys and other monuments attached to the floor structure.

Loads in directions perpendicular thereto, i.e. in an y- and z-direction, are preferably introduced into the fuselage structure, i.e.into the shell or skin over the stiffening elements of the primary structure of the aircraft.

In an advantageous embodiment, the framework comprises a base frame, which comprises a substantially planar shape and which is supported on the at least one stiffening element by means of a plurality of supporting rods. These rods may be realized as hollow or rigid longitudinal elements. In common aircraft designs it is particularly known to use vertically arranged hollow rods supporting horizontal floor beams at the sides of a cargo compartment and thereby creating a lateral delimitation of the so-called triangle area underneath the sides of the cabin. These rods or rods with a similar design may be used for the integration of the monument assembly according to the invention. This allows to evenly distribute loads in z-direction into the primary structure of the aircraft fuselage, while at the same time a usable base surface is created for equipment modules that are to be installed in a cargo-deck. The use of these rods leads to a particularly low weight, while the base frame may comprise the same height above the lower skin region as the adjacent cargo compartment.

Particularly, with a low depth of the framework in x-direction, the stairs may be realized by a plurality of independent stair modules, which may comprise a similar or equal design, but may be integrated in opposite directions. A person may easily climb up the stairs of one stair module and reach the stairs of an adjacent stair module at a forward or rear end of the framework.

It is advantageous if a major fraction of the stability of the framework equipped with cabin equipment modules is achieved through the cabin equipment modules. Hence, the framework itself does not require an excessive stability and simplifies installation and retrofit. The required time and effort for the integration of the framework would be much higher if the framework was extremely rigid. The equipment modules as mechanically self-contained units may be manufactured with a sufficient stability and the integration of these into the aircraft lead to a sufficient re-inforcement of the whole monument assembly.

Still further, at least one of the plurality of framework elements may be a planar component. These may extend over relatively large dimensions, e.g. over the whole height or whole width of the monument assembly, as long as their depht allows to introduce them through the aircraft doors. As an alternative, the framework elements may also be longitudinal, e.g. rod-like elements that are interconnected to a framework structure through a relatively large number of joint connections, thereby building a plurality of substantially triangular or trapezoidal sub-parts of the framework. These may also be cladded by rigid or soft material, if desired.

The invention further relates to an aircraft having such a monument assembly.

In an advantageous embodiment, the aircraft comprises two cabin decks on top of each other, wherein the monument assembly at least extends over the full height of both cabin decks.

### BRIEF DESCRIPTION OF THE DRAWINGS

Further characteristics, advantages and application options of the present invention are disclosed in the following description of the exemplary embodiments in the figures. All the described and/or illustrated characteristics per se and in any combination form the subject of the invention, even irrespective of their composition in the individual claims or their interrelationships. Furthermore, identical or similar components in the figures have the same reference characters. Some cabin equipment modules are referred to with reference numbers associated with the elements they are intended to carry or receive.
Fig. 1 shows a three-dimensional view of a tail section of a two-deck aircraft with a substantially empty monument assembly.
Fig. 2 shows another three-dimensional view of the tail section with an equipped monument assembly.
Fig. 3 illustrates an upper part of the monument assembly and its integration into the primary structure.
Fig. 4 shows further details of the mechanical integration of the monument assembly framework into the primary structure.
Fig. 5 illustrates a bracket attached to a pressure bulkhead for carrying a vertical framework element.
Fig. 6 shows a bracket attached to a pressure bulkhead for fixation of a horizontal framework element.
Fig. 7 shows a lower part of the monument assembly with trolley parking spaces.
Fig. 8 shows the integration of a lower part of the monument assembly into the primary structure.
Fig. 9 shows more details of rods carrying a base frame of the monument assembly.
Fig. 10 demonstrates the depth of the monument assembly in a vertical view on top of the monument assembly.

### DETAILED DESCRIPTION OF EXEMPLARY EMBODIMENTS

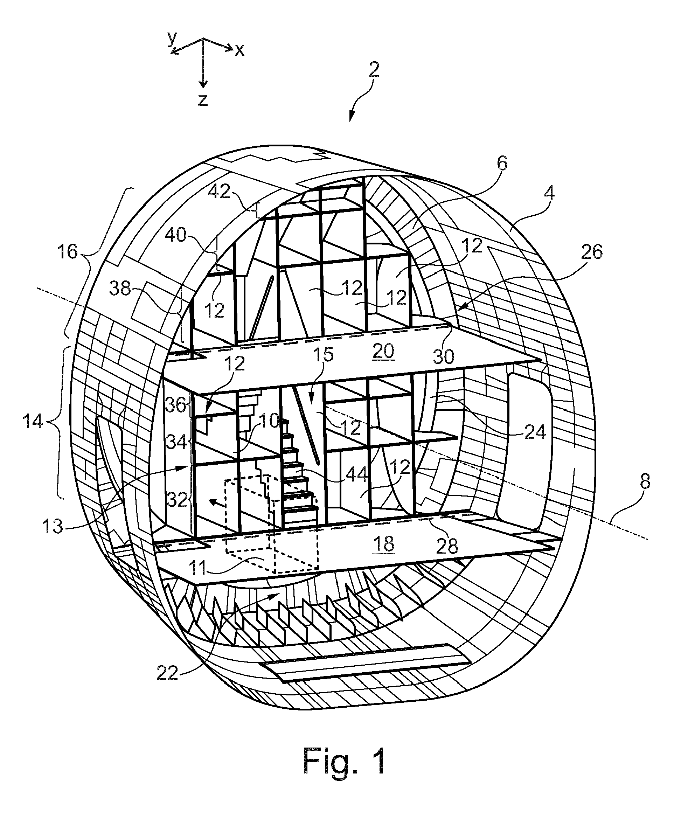

Fig. 1 shows a monument assembly 2 installed in an aircraft tail section, which is depicted in a partial view. A skin 4 made from a sheet or sheet-like material defines an outer contour of the aircraft and is attached to a primary structure, which consists of a plurality of stiffening elements. Here, an approximately annular stiffening element in form of a frame element 6 is shown, which extends around a longitudinal axis 8, particularly provides dimensional stability in a radial direction and transfers loads between a structure attached to the frame element 6 and the skin 4.

The monument assembly 2 comprises a plurality of interconnected framework elements 12, which are exemplarily realized by planar components. These may preferably be as lightweight as possible, e.g. through using a compound of sheet like cover layers made from a metallic or plastic material, which enclose a honeycomb or framework core made from a metallic or plastic material.

As an alternative, the framework elements 12 may be limited to longitudinal, rod-like elements, or a planar framework, e.g. a set of diagonal longidutinal stiffening elements or a combination thereof. A plurality of horizontal and vertical framework elements 12 are interconnected to constitute a framework 13, i.e. a space frame extending in x-, y- and z-direction of the aircraft.

In the particular example of Fig. 1, the aircraft is of a double-deck setup and comprises a main deck 14 and an upper deck 16 arranged above the main deck 14, each of which comprising a floor 18 and 20. Below the main deck 14, a cargo compartment 22 is present for storing cargo or luggage. In the illustration a cargo compartment floor is omitted.

Further, as Fig. 1 shows a tail section of an aircraft with a rearward end of a pressurized cabin, a pressure bulkhead 24 is arranged behind the rearward frame element 6 in x-direction. The floors 18 and 20 extend up to a front face 26 of the framework 13 and are supported by floor beams 28 and 30. The region behind the floor beams 28 and 30 and in front of the pressure bulkhead 24 is only occupied by the framework 13.

The longitudinal extension, i.e. in x-direction, of the framework 13 is limited by the available space between the pressure bulkhead 24 and the chosen position of the floor beams 28 and 30. In a two-deck aircraft this region often serves several auxiliary purposes, such as for arrangement of a stairhouse connecting main and upper deck. Through providing the framework 13, which is solely supported by the primary structure of the aircraft, an extremely modular and space-efficient assembly is enabled, which may very flexibly be customized. As the frame element 6 comprises a particularly high dimensional stability, it is not necessary to provide any further or modified stiffening elements to the aircraft or other elements. Still further, the framework 13 may also be able to provide stairs, while still allowing additional equipment modules to be arranged adjacent to the stairs.

The framework 13 particularly provides rows 32, 34, 36, 38, 40, 42 of compartments 10, which follow on one after another in a z-direction. These are adapted for receiving and holding modular equipment components 11 with very different purposes.

For example, large compartments 15, which are preferably arranged in a center region of the framework 13, may house a stairs module 44, as demonstrated in Fig. 1. Other examples are shown in the further figures.

The total height of the arrangement of rows 32, 34 and 36 may measure approximately 2100 mm. As the height of the main deck 14 may exceed this height, there may be additional space on top of row 36, which is discussed further below. Still further, the total height of the arrangement of rows 38, 40 and 42 may be in the same range. The width of the cabin of an A380, for example, allows to easily house eight cabin trolleys next to each other in y-direction.

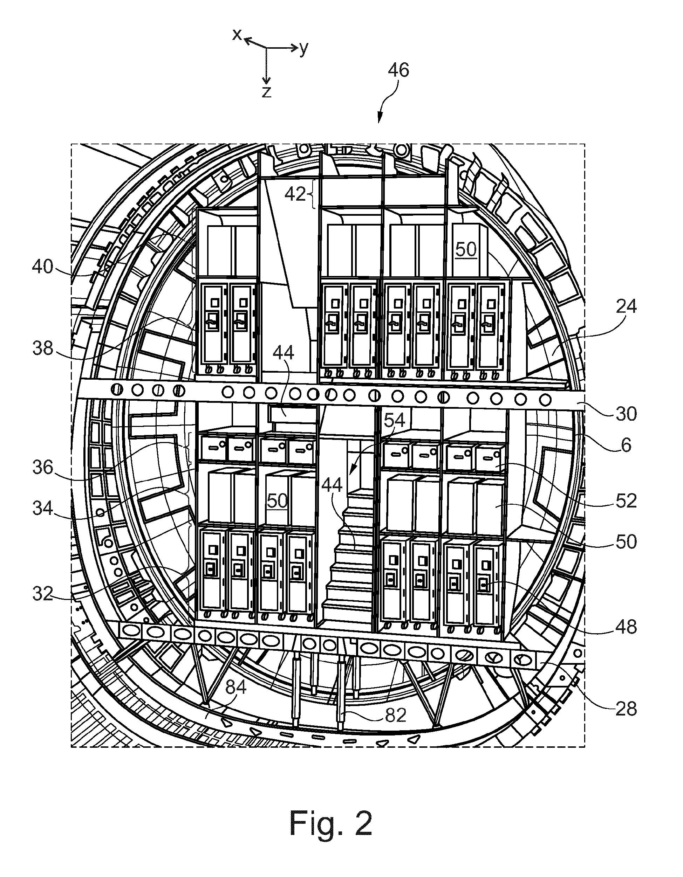

Fig. 2 shows a monument assembly 46, which is a slightly modified monument assembly 2 shown in Fig. 1. Here, the floor beams 28 and 30 are clearly apparent and rows 32, 34, 36, 38, 40 and 42 are equipped with cabin trolleys 48, galley inserts 50 and storage boxes 52 and the stairs module 44 as shown in Fig. 1. The depth of the compartments of rows 32 and 38 may be sufficient to receive a half-size trolley, a full-size trolley or a combination of several half- or full-size trolleys.

It is clearly apparent that the extension of the framework elements 12 is not necessarily equal to the available distance between the floor beams 28, 30 and the pressure bulkhead 24 in x-direction. More particularly, the extensions of the framework elements may be the same throughout at least a portion of the framework 13. As in a center region the bulkhead 24 provides more available space, a central arrangement of the stairs module 44 over several levels is possible, since enough space for a small passageway 54 on a side facing to the pressure bulkhead 24 is available, thereby connecting two stairs modules 44 following on each other.

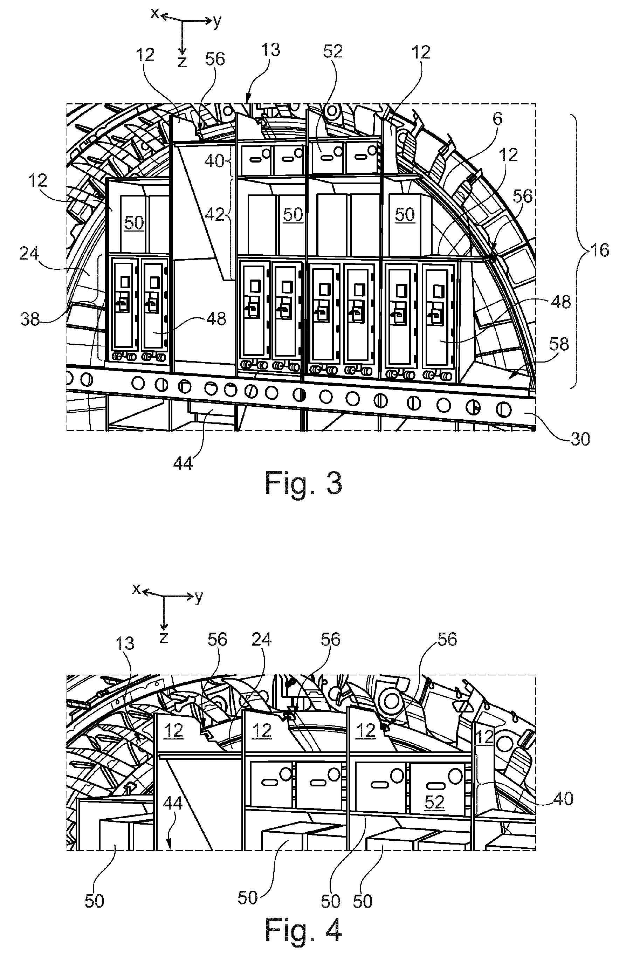

In Fig. 3, an upper part, i.e. the upper deck 16, is shown in more detail. Here, it is clearly visible that the frame element 6 surrounds the longitudinal axis 8 of the aircraft and holds several brackets 56, to which the framework elements 12 are attached. These may not only include horizontal framework elements 12, but also and particularly vertical frame elements 12. Resultantly, the weight of the whole framework 13 is carried solely by one frame element 6 in this particular example, while dynamic loads in x- and y-direction are introduced into lateral areas of the frame element 6 as well as a floor structure following on after the upper floor beam 30 in x-direction. The frame element 6 in this example coincides with a radial delimitation of the pressure bulkhead 24 or is attached thereto.

In Fig. 3 it is further clearly apparent, that behind the floor beam 30, i.e. in a rearward direction, the framework 13 provides its own floor 58, which may be constituted by separate floor panels or through framework elements themselves. Hence, the floor 58 may be one or a group of horizontal framework elements.

In Fig. 4 it is more clear that the pressure bulkhead 24, i.e. the frame element 6 attached to or coinciding with the pressure bulkhead 24, comprises brackets 56, which may be made from another material than the pressure bulkhead 24 and which comprise attachment surfaces screwed or laminated into the pressure bulkhead 24. By using a relatively large number of brackets 56, the required size of the brackets 56 may be reduced, thereby also reducing the additional weight deriving from the brackets 56.

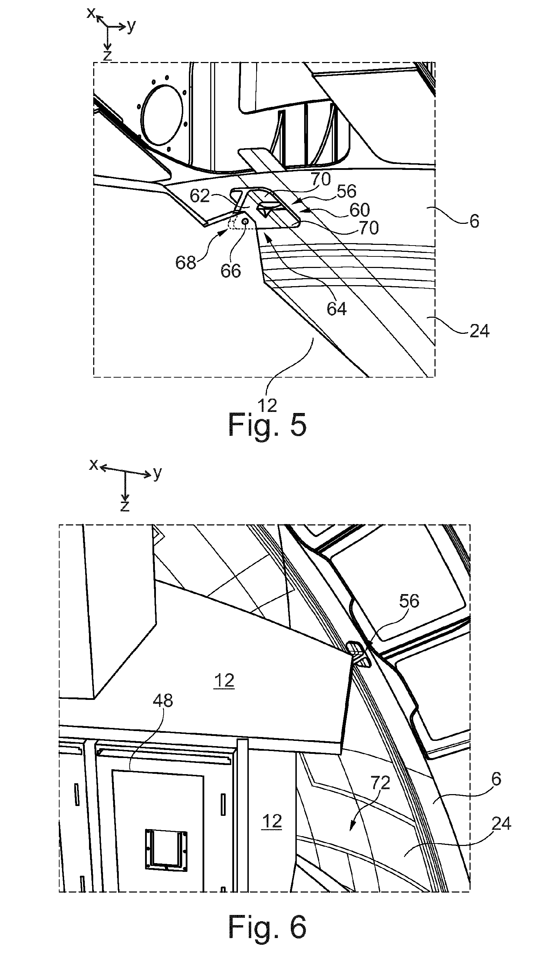

Fig. 5 shows an even more detailed view of a bracket 56 attached to a pressure bulkhead 24, wherein the bracket 56 comprises an attachment surface 60, which rests flushly on the pressure bulkhead 24. A web 62 extends from the attachment surface 60 at an angle and comprises a through-hole 64, to which a bolt 66 may be attached, which in turn extends through a hole 68 of a corresponding framework element 12. The attachment surface 60 may be attached to the pressure bulkhead 24 e.g. through a plurality of bolts 70. Hence, this allows a harmonic introduction of the load occurring in the framework element 12 and highly reduces constraint forces due to the angular freedom of motion.

In a similar way, Fig. 6 shows another detailed view showing the pressure bulkhead 24 and another bracket 56, which is adapted to support a horizontal framework element 12 in the same manner. This may be the same as shown in Fig. 3 extending above the cabin trolleys 48 and, at least partially, constituting a work deck. Between a laterally outermost vertical framework element 12 and a laterally outer delimitation of the pressure bulkhead 24 or the frame element 6, a certain space 72 may remain unused.

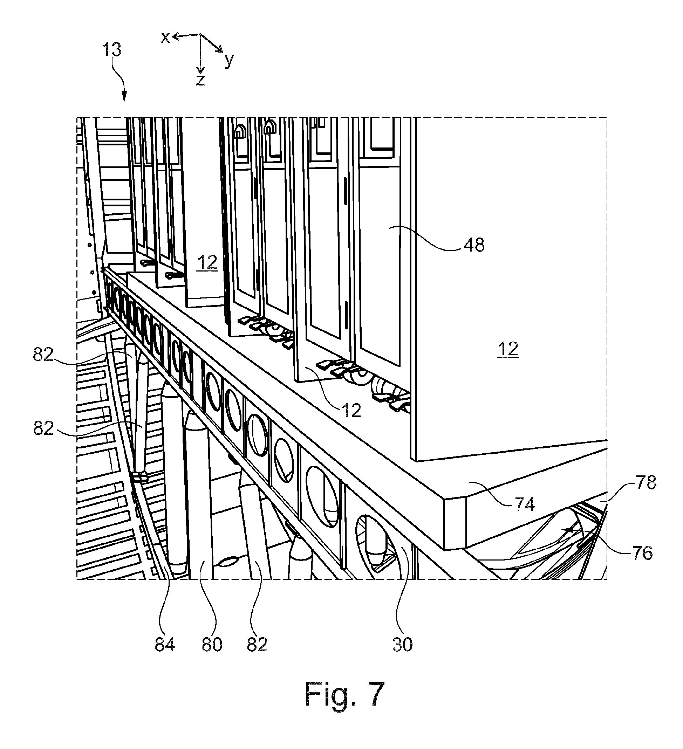

In Fig. 7, a floor 74 of the framework 13 is shown, which is attached to a base frame 76 comprising a combination of the floor beam 28 and a rearward beam 78 carried by vertical support rods 80 and diagonal support rods 82, which in turn are coupled with a frame element 84 forward of the pressure bulkhead 24. The support rods 80 and 82 are preferably particularly lightweight and exemplarily realized as hollow rods. Hence, the base frame 76 provides an excellent and lightweight base for the framework 13 and allows an even and harmonic introduction of load into the primary structure of the aircraft.

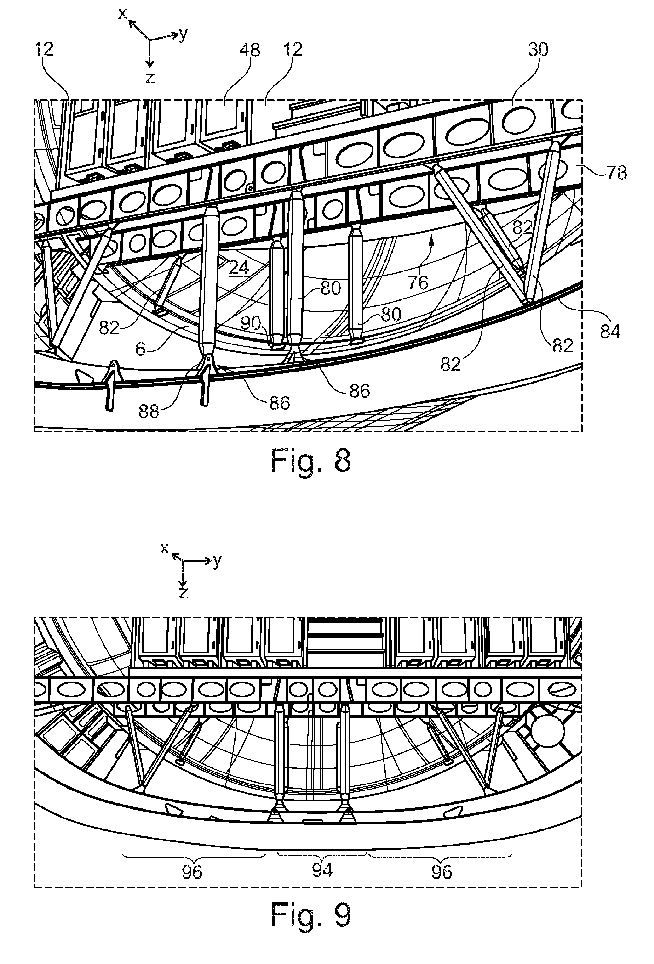

In Fig. 8, this is shown in more detail from below the base frame 76. Here, brackets 86 are shown attached to the frame element 84, comprising a web 88 with a through-hole 90, to which the rods 82 are attachable. The rear floor beam 78 is also carried by supporting rods 80 and 82, which in turn are supported on brackets 92 attached to the pressure bulkhead 24 or the frame element 6, respectively.

Fig. 9 more clearly shows the arrangement of supporting rods 80 and 82 that carry the floor beams 30 and 78. In a middle section 94, rods supporting 80 run in a clearly vertical direction, whereas in outer sections 96, the supporting rods 82 are arranged at an angle to the vertical axis.

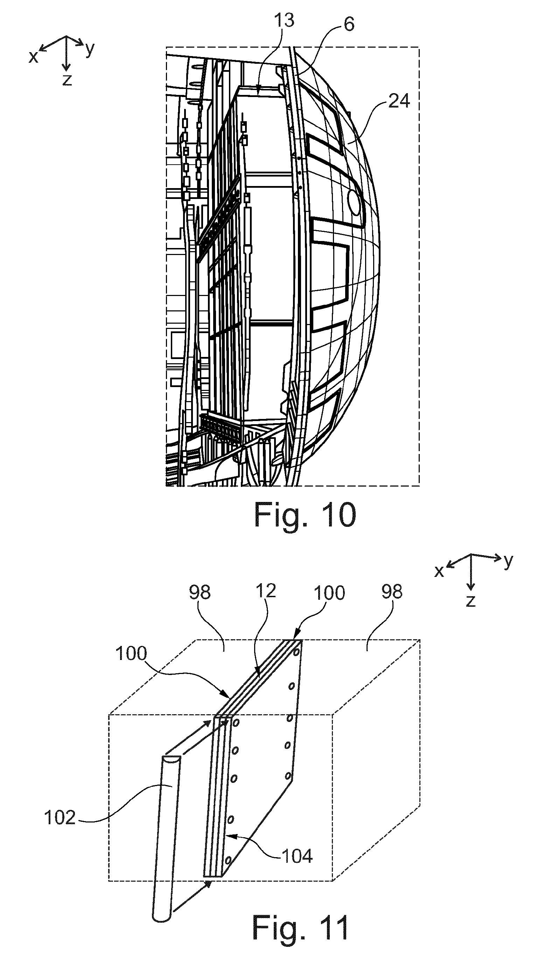

In Fig. 10, the comparably low depth of the framework 13 in front of the pressure bulkhead 24 is demonstrated, wherein it is clar that in a center region of the pressure bulkhead 24 additional installation space is available, such as for the integration of the stairs modules 44.

Lastly, Fig. 11 shows that equipment modules 98 having side walls 100 may be screwed or bolted to a framework element 12. Exemplarily, the framework 13 may gain a sufficient stability only after all equipment modules 98 are attached to the frame elements 12, which in turn allows to provide a very lightweight structure of the framework 13.

To provide a pleasant appearance, an outer trim plate 102 may be attached to a common outer edge 104 of the framework element 12 and the sidewalls 100 of the equipment modules 98. The outer trim plate 102 may be screwed or glued to the outer edge 104.

In addition, it should be pointed out that "comprising" does not exclude other elements or steps, and "a" or "an" does not exclude a plural number. Furthermore, it should be pointed out that characteristics or steps which have been described with reference to one of the above exemplary embodiments can also be used in combination with other characteristics or steps of other exemplary embodiments described above. Reference characters in the claims are not to be interpreted as limitations.

## Claims

1. Monument assembly (2, 46) for an aircraft, the assembly comprising:
at least one component of a primary structure of the aircraft, in particular a fuselage stiffening element (6, 84), and
a plurality of interconnected framework elements (12) for creating a self-carrying three-dimensional framework (13),
wherein the at least one component of the primary structure is attacheable to a skin (4) of the aircraft and comprises at least one holding means,
wherein the framework (13) is mechanically supported on the at least one holding means and
wherein the framework (13) comprises a plurality of compartments (10, 15) accessible from an interior region of the aircraft, which compartments (10, 15) are adapted for receiving and holding cabin equipment modules (44, 48, 50, 52).

2. Monument assembly (2, 46) of claim 1,
wherein the holding means is a bracket attacheable to the at least one component of the primary structure of the aircraft.

3. Monument assembly (2, 46) of claim 2,
wherein the bracket protrudes from the at least one component of the primary structure of the aircraft.

4. Monument assembly (2, 46) of any of the previous claims,
wherein the at least one component of the primary structure is a frame element (6, 84) extending around a longitudinal axis (8) of the aircraft.

5. Monument assembly (2, 46) of any of the previous clams,
wherein the at least one component of the primary structure is a frame element (6, 84) in a tail region of the aircraft, in front of, coinciding with or integrated into a pressure bulkhead (24).

6. Monument assembly (2, 46) of any of the previous claims,
wherein the framework (13) substantially extends over the complete interior space of an associated lengthwise section in the fuselage of the aircraft.

7. Monument assembly (2, 46) of any of the previous claims,
wherein the compartments (10, 15) are arranged in a grid having at least two rows (32, 34, 36, 38, 40, 42) of compartments (10, 15), which rows (32, 34, 36, 38, 40, 42) follow on after another in a vertical direction.

8. Monument assembly (2, 46) of claim 7,
wherein at least one row (32, 34, 36, 38, 40, 42) or at least one group of rows (32, 34, 36, 38, 40, 42) is associated with a cabin deck (14, 16) of the aircraft.

9. Monument assembly (2, 46) of claim 7 or 8,
wherein at least one row (32, 34, 36, 38, 40, 42) or one group of rows (32, 34, 36, 38, 40, 42) is associated with a cargo deck (22) of the aircraft.

10. Monument assembly (2, 46) of one of claims 7 to 9,
wherein a top region of a row (32, 34, 36, 38, 40, 42) or an upper row (32, 34, 36, 38, 40, 42) of a group of rows (32, 34, 36, 38, 40, 42) associated with a cabin deck (14, 16) or a cargo deck (22) comprises a rack for at least one auxiliary system.

11. Monument assembly (2, 46) of any of the previous claims,
wherein at least one of the plurality of framework elements (12) is a planar component.

12. Monument assembly (2, 46) of any of the previous claims,
wherein a major fraction of the stability of the framework (13) equipped with cabin equipment modules (44, 48, 50, 52)is achieved through the cabin equipment modules (44, 48, 50, 52).

13. Monument assembly (2, 46) of any of the previous claims,
further comprising a plurality of cabin equipment modules (44, 48, 50, 52), chosen from a group of cabin equipment modules (44, 48, 50, 52), the group consisting of:
- Storage compartments,
- Cabin trolley parking spaces,
- Lifts,
- Compartments for holding galley appliances,
- Stairs,
- Restrooms.

14. Aircraft, having a fuselage and a monument assembly (2, 46) of any of the claims 1 to 13.

15. Aircraft according to claim 14, wherein the aircraft comprises two cabin decks (14, 16) on top of each other, wherein the monument assembly (2, 46) at least extends over the full height of both cabin decks (14, 16).
